**Europäisches Patentamt**

**European Patent Office**

**Office européen des brevets**

(11) Veröffentlichungsnummer: **0 315 858 B1**

# EUROPÄISCHE PATENTSCHRIFT

(45) Veröffentlichungstag der Patentschrift: **27.05.92**

(21) Anmeldenummer: **88118092.1**

(22) Anmeldetag: **31.10.88**

(51) Int. Cl.5: **C09J 127/06**, C08L 27/24, C08K 13/02, //(C08K13/02,3:36, 5:57)

(54) **Lagerstabiler Klebstoff für insbesondere nachchlorierte PVC-Kunststoffe.**

(30) Priorität: **09.11.87 DE 3738060**

(43) Veröffentlichungstag der Anmeldung:
**17.05.89 Patentblatt 89/20**

(45) Bekanntmachung des Hinweises auf die
Patenterteilung:
**27.05.92 Patentblatt 92/22**

(84) Benannte Vertragsstaaten:
**BE DE ES FR GB IT LU NL**

(56) Entgegenhaltungen:
US-A- 2 954 362
US-A- 3 726 826

(73) Patentinhaber: **Henkel Kommanditgesellschaft auf Aktien**
**Postfach 1100 Henkelstrasse 67**
**W-4000 Düsseldorf 1(DE)**

(72) Erfinder: **Dierdorf, Hans-Rolf**
**Ludwig-Walker-Strasse 25**
**W-4018 Langenfeld(DE)**
Erfinder: **Wegner, Jürgen, Dr.**
**Siegfriedstrasse 21**
**W-4000 Düsseldorf 11(DE)**

**Beschreibung**

Die Erfindung betrifft einen lagerstabilen Klebstoff für insbesondere nachchlorierte PVC-Kunststoffe.

Rohre und Fittings aus nachchloriertem PVC werden in der Technik immer dort eingesetzt, wo neben hohen Innendrücken bis zu 4 bar Temperaturen zwischen 60 und 95°C auftreten. Für derartige Rohre und Fittings sind aus dem Stand der Technik Klebstoffe bekannt, die zwischen 10 und 30 Gew.-% nachchloriertes PVC mit geeigneten K-Werten und Chlorgehalten als Bindemittel in Kombination mit geeigneten Lösemitteln wie Tetrahydrofuran, Cyclohexanon, Methylethylketon, N-Methylpyrrolidon, Methylenchlorid, Aceton, Ethylacetat und dergleichen sowie zusätzlich konsistenzbildende Anteile aufweisen.

Ein derartiger Klebstoff wird in der US 3 726 826 beschrieben. Er besteht im wesentlichen aus 5 bis 25 Gew.-% eines nachchlorierten PVC-Kunststoffs mit einer Dichte von 1,43 bis 1,65 g/cm$^3$, Tetrahydrofuran und ca. 0,4 bis 5 Gew.-% 1,2-Butylenoxid. Die letzte Komponente wird zur Verbesserung der Lagerstabilität gegen Gelierung eingesetzt.

Es gehört zu den typischen Eigenschaften dieser nachchlorierten PVC-Typen dieser Klebstoffe, daß sie über einen nicht in jedem Einzelfall klar überschaubaren Prozeß und je nach Lagertemperatur Chlor abspalten, das durch unvermeidliche Feuchtigkeitsanteile im Klebstoff (z.B. in Folge Verunreinigungen der Lösemittel) über eine Chlorwasserstoffbildung zu Gebindekorrosionen führen kann. Um dennoch Klebstoffe der hier angesprochenen Art über eine längere Lagerzeit korrosionsstabil aufbewahren zu können, werden diese vorzugsweise in Gebinden aus solchen Materialien gelagert, die durch geeignete Maßnahmen oder aufgrund ihrer chemischen Zusammensetzung dem chemischen Angriff des Chlorwasserstoffs standhalten. Hierzu gehören insbesondere Glasgefäße, polyolefinbeschichtete Metallgefäße oder Behälter aus Aluminiumlegierungen. Diese Verpackungsarten weisen jedoch entweder Nachteile hinsichtlich der Handhabbarkeit auf oder verteuern die Klebstoffe in hohem Maße.

Verwendet man Standardverpackungen für die vorgenannten Klebstoffe auf Basis von innenverzinnten Stahlblechen, ist durch den Eintrag von Eisenionen, die speziell über den Lötbereich der Dosennaht bzw. im Bördelbereich auftreten, eine allmähliche Vergelung des Klebstoffes unvermeidbar.

Die Erfindung ist auf einen Klebstoff der obengenannten Art gerichtet, der ohne Einbuße der notwendigen klebetechnischen Eigenschaften auch in Stahlblechgebinden mit Innenverzinnung lagerstabil ist.

Diese Aufgabe wird erfindungsgemäß durch einen lagerstabilen Klebstoff gelöst, der eine Grundmischung aus 5 bis 30 Gew.-% nachchloriertem PVC und 95 bis 70 Gew.-% eines organischen Lösemittels umfaßt, wobei der Grundmischung eine Stabilisatorkombination von wirksamen Mengen von organischen Zinnverbindungen und Carbonaten aus der von Ammonium-, Lithium-, Natrium- und Kaliumcarbonaten gebildeten Gruppe sowie übliche Additive wie Schlagzähmodifier, Antioxidationsmittel und UV-Stabilisatoren zugesetzt ist.

Als organische Lösemittel eignen sich die aus dem Stand der Technik an sich bekannten wie N-Methylpyrrolidon, Dimethylformamid, Dichlormethan, Methylisobutylketon, Aceton, Ethylacetat oder dergleichen, einzeln oder in Mischungen derselben, insbesondere organische Lösemittel aus der von Ketonen und cyclischen Ethern gebildeten Gruppe. Besonders bevorzugt sind organische Lösemittel aus der von Tetrahydrofuran, Methylethylketon und Cyclohexanon gebildeten Gruppe.

Bevorzugt enthält die Grundmischung des lagerstabilen Klebstoffs der Erfindung nachchlorierte PVC-Typen mit einem Chlorgehalt von 65 bis 68 Gew.-% und K-Werten von 50 bis 69.

Die erfindungsgemäß einzusetzenden organischen Zinnverbindungen sind die aus der Korrosionsschutztechnik bekannten, insbesondere alkylierten Zinn(IV)verbindungen, die mit organischen Säure-, Mercapto-, Thiosäure- und Thioestergruppen funktionalisiert sind. Bevorzugt sind organische Zinnverbindungen aus der von Di-n-Octylzinndimercaptid, Dibutylzinndithioestern, Di-n-Octylzinndithioglykolat, Dibutylzinndilaurat, Di-n-Octylzinnmaleat, Dibutylzinnmaleat, Dibutylzinncarboxylat und Dibutylzinndithioglykolat gebildeten Gruppe.

Vorzugsweise enthalten die lagerstabilen Klebstoffe der Erfindung 1 bis 10 Gew.-% der Stabilisatorkombination, bezogen auf Gewicht des in dem Klebstoff enthaltenen nachchlorierten PVC bei einer angenommenen Chlorabspaltungsrate von 5 Gew.-% p.a. Weicht die tatsächliche Chlorabspaltungsrate des nachchlorierten PVC von dem vorgenannten Wert ab, kann die Menge der zuzusetzenden Stabilisatorkombination ohne weiteres ermittelt werden. Die Stabilisatorkombination enthält ihrerseits die Carbonate und organischen Zinnverbindungen im Gewichtsverhältnis von etwa 1,5 bis 2,5 : 1.

Die Erfindung wird im folgenden anhand von bevorzugten Ausführungsbeispielen näher erläutert, wobei auf die Zeichnungen Bezug genommen wird. In den Beispielen bedeutet PVC-C nachchloriertes PVC. Der in den Beispielen angegebene Acrylat-Modifier ist ein Produkt auf der Basis von Polymethylmethacrylat, das als Schlagzähmodifier für PVC-Kunststoffe im Handel erhältlich ist, z.B. PARALOID$^R$K120N der Firma Rohm & Haas Inc.

Beispiel 1.

| 10 % | PVC-C, KW 57, Cl-Gehalt 68 % |
|---|---|
| 66 % | Tetrahydrofuran |
| 15 % | Methylethylketon |
| 4,5 % | Cyclohexanon |
| 2 % | pyrogene Kieselsäure |
| 1,7 % | Acrylat-Modifier |
| 0,3 % | Dibutylzinncarboxylat[1) |
| 0,5 % | Natriumcarbonat |

1) von der Herstellerin nicht näher spezifiziertes Handelsprodukt

Beispiel 2.

| 20 % | PVC-C, KW 57, Cl-Gehalt 68 % |
|---|---|
| 56 % | Tetrahydrofuran |
| 17,5 % | Methylethylketon |
| 2,0 % | Cyclohexanon |
| 2 % | pyrogene Kieselsäure |
| 1,7 % | Acrylat-Modifier |
| 0,3 % | Dibutylzinncarboxylat |
| 0,5 % | Natriumcarbonat |

Beispiel 3.

| 20 % | PVC-C, KW 57, Cl-Gehalt 68 % |
|---|---|
| 60 % | Tetrahydrofuran |
| 15 % | Methylethylketon |
| 2,5 % | pyrogene Kieselsäure |
| 1,7 % | Acrylat-Modifier |
| 0,3 % | Dibutylzinndilaurat |
| 0,5 % | Natriumcarbonat |

Beispiel 4.

| 20,0 % | PVC-C, KW 57, Cl-Gehalt 68 % |
|---|---|
| 75,5 % | Tetrahydrofuran |
| 2,0 % | pyrogene Kieselsäure |
| 1,7 % | Acrylat-Modifier |
| 0,3 % | Dibutylzinndilaurat |
| 0,5 % | Natriumcarbonat |

Beispiel 5.

| | |
|---|---|
| 20 % | PVC-C, KW 69, Cl-Gehalt 67 % |
| 60 % | Tetrahydrofuran |
| 17 % | Methylethylketon |
| 1,2 % | pyrogene Kieselsäure |
| 1 % | Acrylat-Modifier |
| 0,3 % | Di-n-Octylzinndimercaptid |
| 0,5 % | Natriumcarbonat |

Beispiel 6.

| | |
|---|---|
| 20 % | PVC-C, KW 69, Cl-Gehalt 67 % |
| 60 % | Tetrahydrofuran |
| 14 % | Methylethylketon |
| 1,2 % | pyrogene Kieselsäure |
| 4 % | Acrylat-Modifier |
| 0,3 % | Di-n-Octylzinndimercaptid |
| 0,5 % | Natriumcarbonat |

Beispiel 7.

| | |
|---|---|
| 10 % | PVC-C, KW 66, Cl-Gehalt 67 % |
| 70 % | Tetrahydrofuran |
| 17 % | Methylethylketon |
| 1,6 % | pyrogene Kieselsäure |
| 1 % | Acrylat-Modifier |
| 0,15 % | Di-n-Octylzinndimercaptid |
| 0,25 % | Natriumcarbonat |

Beispiel 8.

| | |
|---|---|
| 10 % | PVC-C, KW 66, Cl-Gehalt 67 % |
| 70 % | Tetrahydrofuran |
| 17 % | Methylethylketon |
| 1,6 % | pyrogene Kieselsäure |
| 4 % | Acrylat-Modifier |
| 0,15 % | Di-n-Octylzinndimercaptid |
| 0,25 % | Natriumcarbonat |

Vergleichsbeispiel.

Es wurde zu Vergleichszwecken - zunächst ohne Zusatz der Komponenten der Stabilisatorkombination - ein Klebstoff der folgenden Zusammensetzung hergestellt:

4

| 20 % | PVC-C, KW 57, Cl-Gehalt 68 % |
|---|---|
| 60,5 % | Tetrahydrofuran |
| 17,5 % | Methylethylketon |
| 2 % | Cyclohexanon. |

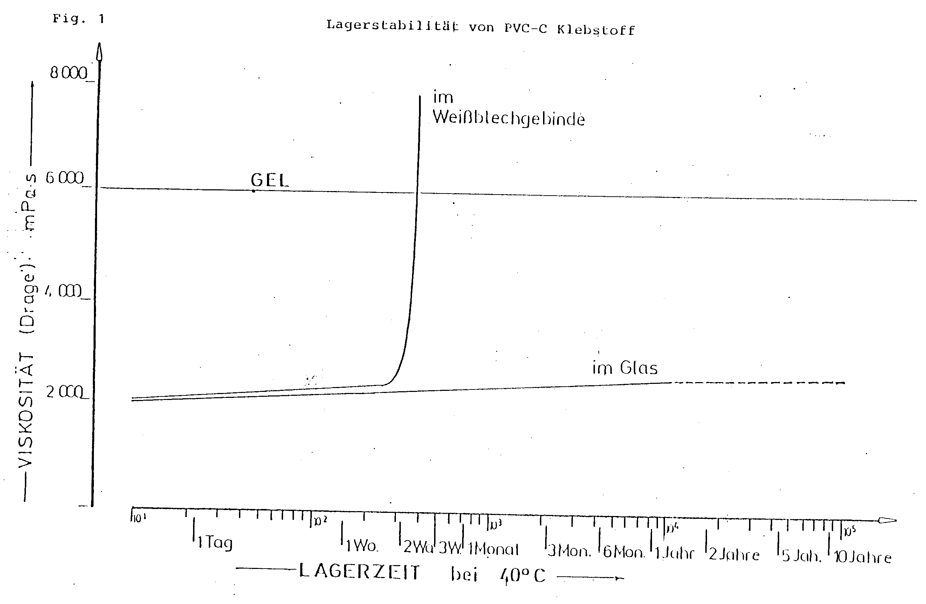

Die Eigenschaften der Vergleichsrezeptur wurden mit denjenigen des Ausführungsbeispiels 2 verglichen. Die Ergebnisse sind in der folgenden Beschreibung sowie in den Fig. 1 bis 5 erläutert.

Wird ein Klebstoff gemäß der Vergleichsrezeptur in Standardglas- (Pyrex) bzw. Weißblechgebinden bei 40°C im Trockenschrank gelagert, ergeben sich hinsichtlich der Lagerstabilität die in Fig. 1 dargestellten Zusammenhänge. Bereits nach einer Lagerung von ca. 2 Wochen im Weißblechgebinde tritt Gelbildung ein.

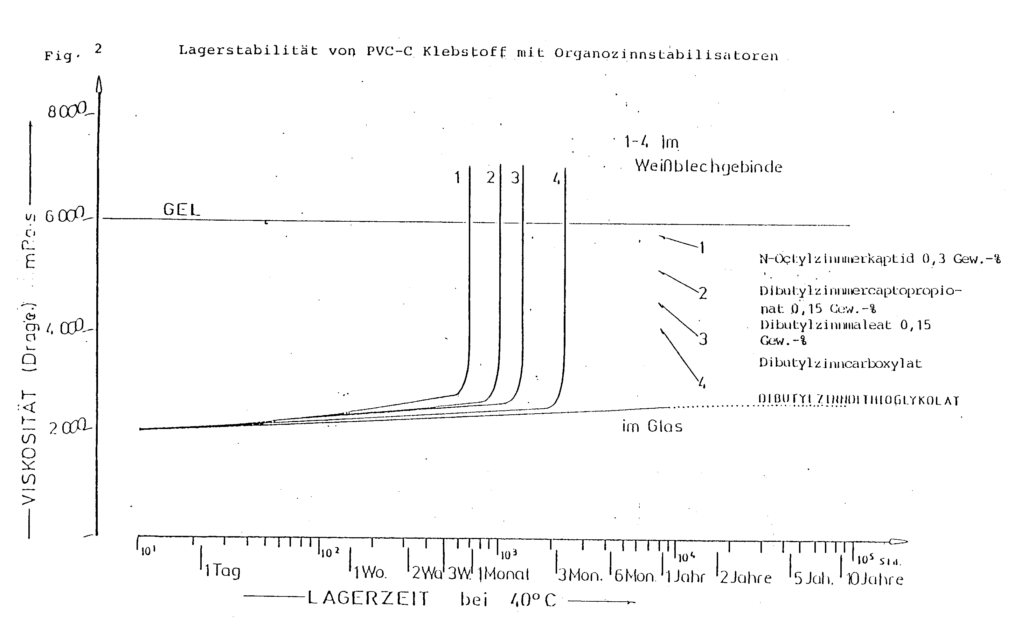

Aus Fig. 2 sind die Lagerstabilitäten ersichtlich, die man erhält, wenn man der Rezeptur gemäß Vergleichsbeispiel Di-n-Octylzinnmercaptid (Kurve 1), Organozinnsalze (Gemisch von 0,15 Gew.-% Dibutylzinnmercaptopropionat und 0,15 Gew.-% Dibutylzinnmaleat; Kurve 2), Dibutylzinncarboxylat (Kurve 3) und Dibutylzinndithioglykolat (Kurve 4) zusetzt. Die Gelbildung im Weißblechgebinde tritt verzögert ein, jedoch bereits schon im Zeitraum von ca. 3 Wochen bis 3 Monaten.

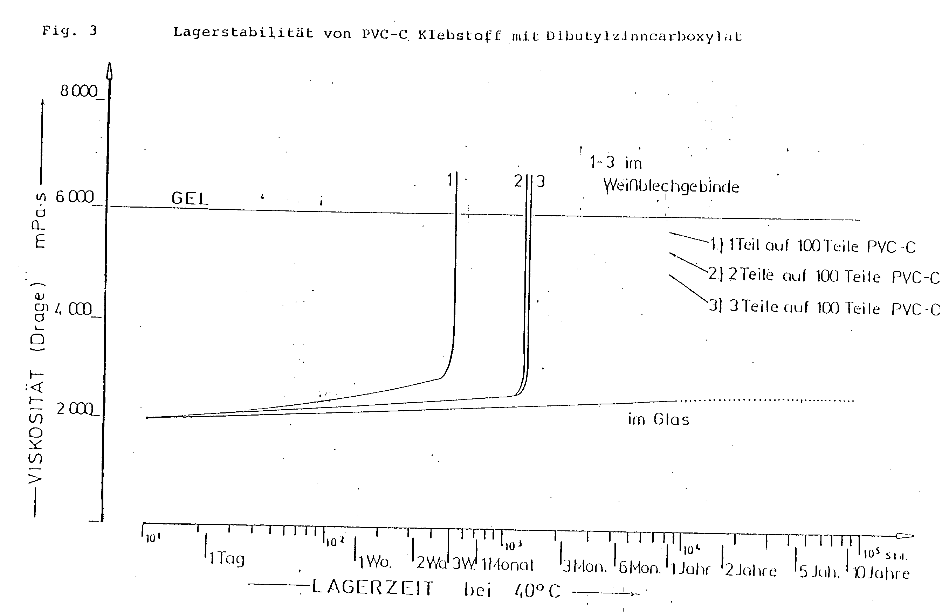

Die erzeilbare Lagerstabilitätsverlängerung ist abhängig von der Einsatzmenge des Korrosionsinhibitors. In Fig. 3 ist die Stabilitätszunahme bei der Vergleichsrezeptur unter Zusatz von Dibutylzinncarboxylat erläutert, und zwar bei Zusatz von 1 (Kurve 1), 2 (Kurve 2) und 3 (Kurve 3) Teilen Dibutylzinncarboxylat auf jeweils 100 Teile PVC-C. Es ergeben sich Stabilitäten von ca. 2,5 Wochen bis 2 Monaten.

Bereits im Anfangsstadium der Vergelung ist mit schwerwiegenden Veränderungen des rheologischen Verhaltens und unakzeptablen anwendungstechnischen Eigenschaften der Klebstoffe zu rechnen. Die bisher dargestellten Versuchsergebnisse zeigen auch, daß die genannten Korrosionsinhibitoren auf Basis von organischen Zinnverbindungen auch an denjenigen Innenpartien der Gebinde unwirksam bleiben, an denen aus fertigungstechnischen Gründen ungeschützter Stahl anzutreffen ist.

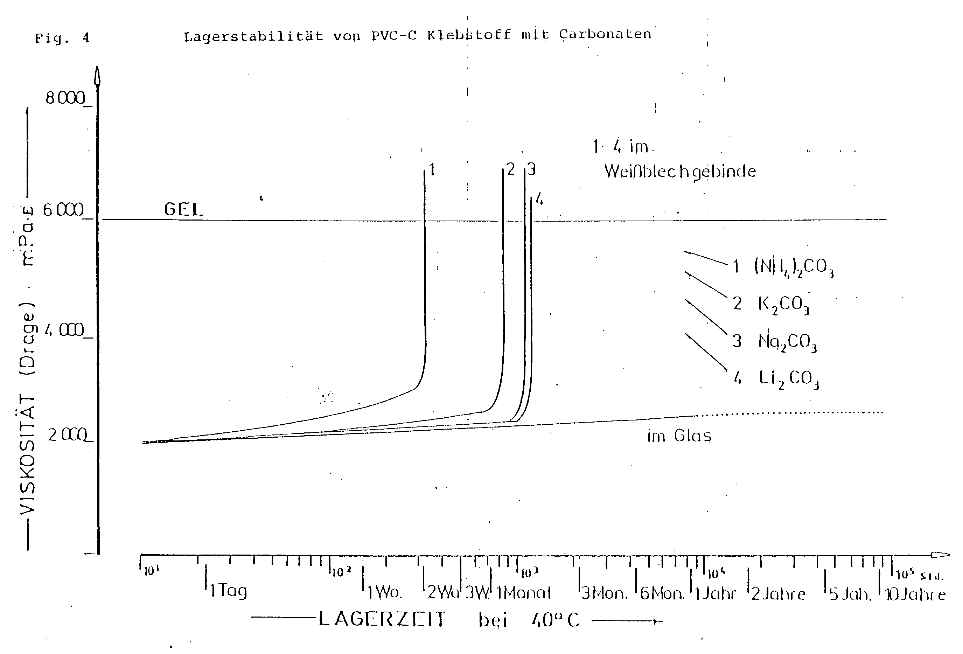

Aus Fig. 4 ergibt sich, daß die Lagerstabilität von Klebstoffen gemäß der Vergleichsrezeptur in Weißblechgebinden sich auch dann nicht nennenswert verbessern läßt, wenn einfache Chlorfänger - jeweils in Mengen von 0,5 Gew.-% - wie Ammoniumcarbonat (Kurve 1), Kaliumcarbonat (Kurve 2), Natriumcarbonat (Kurve 3) und Lithiumcarbonat (Kurve 4) zugesetzt werden; die Stabilitäten betragen allenfalls ca. 1,5 Wochen bis 2 Monate.

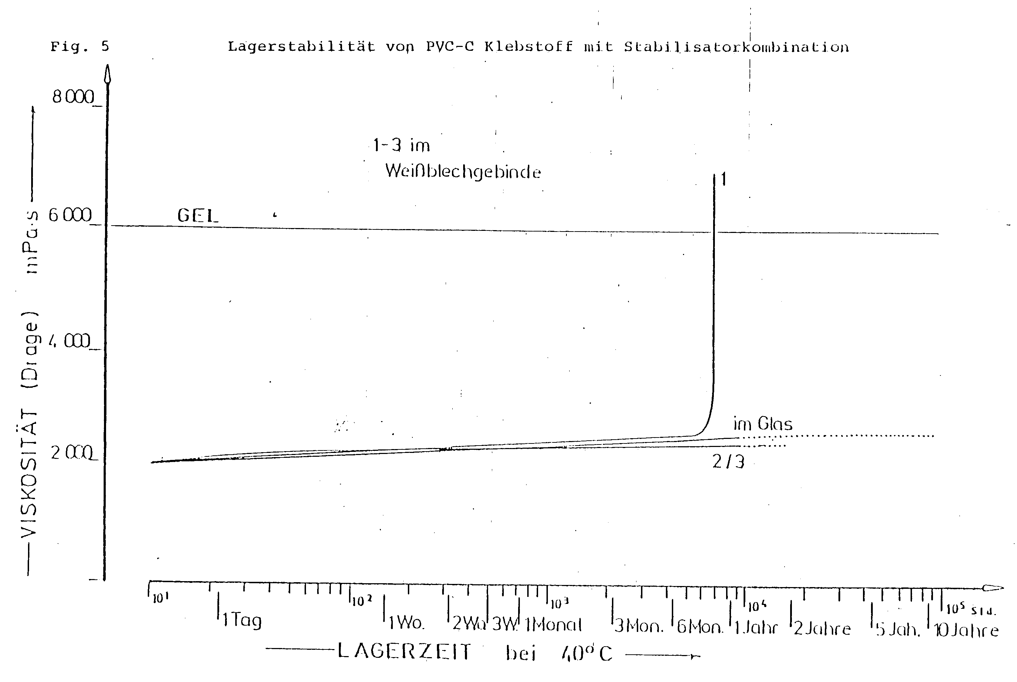

Erst durch die erfindungsgemäße Kombination von zinnorganischen Verbindungen und Carbonaten des Ammoniums, Natriums, Kaliums und/oder Lithiums wird in Weißblechgebinden eine drastische Erhöhung der Lagerstabilität der Vergleichsrezeptur erhalten. Dies ergibt sich aus Fig. 5, wo die Lagerstabilität einer aus 100 Teilen PVC-C, 2 Teilen Dibutylzinncarboxylat und 4 Teilen Kaliumcarbonat (Kurve 1), Natriumcarbonat (Gerade 2) oder Lithiumcarbonat (Gerade 3) wiedergegeben ist. Die Kaliumcarbonat enthaltende Rezeptur weist eine Stabilität von ca. 8 Monaten auf, die Natriumcarbonat oder Lithiumcarbonat enthaltenen Rezepturen sind hinsichtlich ihrer Lagerstabilität in Weißblechgebinden sogar besser als bei einer Lagerung in Glasbehältern, da im Glas grundsätzlich höhere Lösungsmitteldiffusionsraten vorliegen.

**Patentansprüche**

1. Lagerstabiler Klebstoff für insbesondere nachchlorierte PVC-Kunststoffe, gekennzeichnet durch eine Grundmischung aus 5 bis 30 Gew.-% nachchloriertem PVC und 95 bis 70 Gew.-% eines organischen Lösemittels, wobei der Grundmischung eine Stabilisatorkombination von wirksamen Mengen von organischen Zinnverbindungen mit mindestens einer Sn-C-Bindung und Carbonaten aus der von Ammonium-, Lithium-, Natrium- und Kaliumcarbonaten gebildeten Gruppe sowie übliche Additive wie Schlagzähmodifier, Antioxidationsmittel und UV-Stabilisatoren zugesetzt sind.

2. Lagerstabiler Klebstoff nach Anspruch 1, dadurch gekennzeichnet, daß das in der Grundmischung enthaltene nachchlorierte PVC einen Chlorgehalt von 65 bis 68 und K-Werte von 50 bis 69 aufweist.

3. Lagerstabiler Klebstoff nach Anspruch 1 oder 2, dadurch gekennzeichnet, daß die organischen Lösemittel aus der von Ketonen und cyclischen Ethern gebildeten Gruppe ausgewählt sind.

4. Lagerstabiler Klebstoff nach einem der Ansprüche 1 bis 3, dadurch gekennzeichnet, daß die organischen Lösemittel aus der von Tetrahydrofuran, Methylethylketon und Cyclohexanon gebildeten Gruppe ausgewählt sind.

**5.** Lagerstabiler Klebstoff nach einem der Ansprüche 1 bis 4, dadurch gekennzeichnet, daß die organischen Zinnverbindungen aus der von Di-n-Octylzinndimercaptid, Dibutylzinndithioestern, Di-n-Octylzinndithioglykolat, Dibutylzinndilaurat, Di-n-Octylzinnmaleat, Dibutylzinnmaleat, Dibutylzinncarboxylat und Dibutylzinndithioglykolat gebildeten Gruppe ausgewählt sind.

**6.** Lagerstabiler Klebstoff nach einem der Ansprüche 1 bis 5, dadurch gekennzeichnet, daß er 1 bis 10 Gew-% der Stabilisatorkombination, bezogen auf Gewicht des in dem Klebstoff enthaltenen nachchlorierten PVC bei einer angenommenen Chlorabspaltungsrate von 5 Gew.-% p.a. enthält.

**7.** Lagerstabiler Klebstoff nach einem der Ansprüche 1 bis 6, dadurch gekennzeichnet, daß die Stabilisatorkombination die Carbonate und organischen Zinnverbindungen im Gewichtsverhältnis von etwa 1,5 bis 2,5 : 1 enthält.

**8.** Verfahren zur Herstellung von lagerstabilem Klebstoff für insbesondere nachchlorierte PVC-Kunststoffe, dadurch gekennzeichnet, daß man einer Grundmischung aus 5 bis 30 Gew.-% nachchloriertem PVC und 95 bis 70 Gew.-% eines organischen Lösemittels eine Stabilisatorkombination von wirksamen Mengen von organischen Zinnverbindungen mit mindestens einer Sn-C-Bindung und Carbonaten aus der von Ammonium-, Lithium-, Natrium- und Kaliumcarbonaten gebildeten Gruppe sowie übliche Additive wie Schlagzähmodifier, Antioxidationsmittel und UV-Stabilisatoren zusetzt.

**9.** Verfahren zur Herstellung von lagerstabilem Klebstoff nach Anspruch 8, dadurch gekennzeichnet, daß zur Bereitung der Grundmischung von PVC mit einem Chlorgehalt von 65 bis 68 und einem K-Wert von 50 bis 69 ausgeht.

**10.** Verfahren zur Herstellung von lagerstabilem Klebstoff nach einem der Ansprüche 8 oder 9, dadurch gekennzeichnet, daß die organischen Zinnverbindungen aus der von D-n-Octylzinndimercaptid, Dibutylzinndithioestern, Di-n-Octylzinndithioglykolat, Dibutylzinndilaurat, Di-n-Octylzinnmaleat, Dibutylzinnmaleat, Dibutylzinncarboxylat und Dibutylzinndithioglykolat gebildeten Gruppe ausgewählt worden ist.

**11.** Verfahren zur Herstellung von lagerstabilen Klebstoffen nach einem der Ansprüche 8 oder 10, dadurch gekennzeichnet, daß man die Stabilisatorkombination aus Carbonaten und organischen Zinnverbindungen im Gewichtsverhältnis von etwa 1,5 bis 2,5 : 1 mischt.

**Claims**

**1.** A storable adhesive for PVC plastics, particularly post-chlorinated PVC plastics, characterized by a basic mixture of 5 to 30% by weight post-chlorinated PVC and 95 to 70% by weight of an organic solvent, a stabilizer combination of effective quantities of organotin compounds containing at least one Sn-C bond and carbonates from the group consisting of ammonium, lithium, sodium and potassium carbonates and also standard additives, such as impact modifiers, antioxidants and UV stabilizers, being added to the basic mixture.

**2.** A storable adhesive as claimed in claim 1, characterized in that the post-chlorinated PVC in the basic mixture has a chlorine content of 65 to 68 and K-values of 50 to 69.

**3.** A storable adhesive as claimed in claim 1 or 2, characterized in that the organic solvents are selected from the group consisting of ketones and cyclic ethers.

**4.** A storable adhesive as claimed in any of claims 1 to 3, characterized in that the organic solvents are selected from the group consisting of tetrahydrofuran, methyl ethyl ketone and cyclohexanone.

**5.** A storable adhesive as claimed in any of claims 1 to 4, characterized in that the organotin compounds are selected from the group consisting of di-n-octyl tin dimercaptide, dibutyl tin dithioesters, di-n-octyl tin dithioglycolate, dibutyl tin dilaurate, di-n-octyl tin maleate, dibutyl tin maleate, dibutyl tin carboxylate and dibutyl tin dithioglycolate.

**6.** A storable adhesive as claimed in any of claims 1 to 5, characterized in that it contains 1 to 10% by weight of the stabilizer combination, based on the weight of the post-chlorinated PVC in the adhesive,

EP 0 315 858 B1

for an assumed chlorine elimination rate of 5% by weight p.a.

7. A storable adhesive as claimed in any of claims 1 to 6, characterized in that the stabilizer combination contains the carbonates and organotin compounds in a ratio by weight of approximately 1.5 to 2.5:1.

8. A process for the production of storable adhesive for PVC plastics, particularly post-chlorinated PVC plastics, characterized in that a stabilizer combination of effective quantities of organotin compounds containing at least one Sn-C bond and carbonates from the group consisting of ammonium, lithium, sodium and potassium carbonates and also standard additives, such as impact modifiers, antioxidants and UV stabilizers, is added to a basic mixture of 5 to 30% by weight post-chlorinated PVC and 95 to 70% by weight of an organic solvent.

9. A process as claimed in claim 8 for the production of storable adhesive, characterized in that the basic mixture is prepared from PVC having a chlorine content of 65 to 68 and a K-value of 50 to 69.

10. A process as claimed in claim 8 or 9 for the production of storable adhesive, characterized in that the organotin compounds are selected from the group consisting of di-n-octyl tin dimercaptide, dibutyl tin dithioesters, di-n-octyl tin dithioglycolate, dibutyl tin dilaurate, din-octyl tin maleate, dibutyl tin maleate, dibutyl tin carboxylate and dibutyl tin dithioglycolate.

11. A process as claimed in claim 8 or 10 for the production of storable adhesive, characterized in that the stabilizer combination of carbonates and organotin compounds is mixed in a ratio by weight of approximately 1.5 to 2.5:1.

**Revendications**

1. Colle stable au stockage, en particulier pour plastiques au PVC postchloré, caractérisée par un mélange de base constitué de 5 à 30% en poids de PVC postchloré et de 95 à 70% en poids d'un solvant organique tandis que le mélange de base reçoit l'addition d'une combinaison de stabilisant avec des quantités actives de composés organiques de l'étain, avec au moins une liaison Sn-C et de carbonates choisis dans le groupe formé des carbonates d'ammonium, de lithium, de sodium et de potassium, ainsi que les additifs usuels tels que modificateur de résilience, agent antioxydant et stabilisants pour les rayons UV.

2. Colle stable au stockage selon la revendication 1, caractérisée en ce que le PVC postchloré contenu dans le mélange de base présente une teneur en chlore de 65 à 68% et des valeurs K de 50 à 69.

3. Colle stable au stockage selon la revendication 1 ou 2, caractérisée en ce que les solvants organiques sont choisis dans le groupe constitué par les cétones et les éthers cycliques.

4. Colle stable au stockage selon l'une des revendications 1 à 3, caractérisée en ce que les solvants organiques sont choisis dans le groupe formé du tétrahydrofuranne, de la méthyléthylcétone et de la cyclohexanone.

5. Colle stable au stockage selon l'une des revendications 1 à 4, caractérisée en ce que les composés organiques de l'étain sont choisis dans le groupe constitué du dimercaptide de di-n-octylétain, des dithioesters de dibutylétain, du dithioglycolate de di-n-octylétain, du dilaurate de dibutylétain, du maléate de di-n-octylétain, du maléate de dibutylétain, du carboxylate du dibutylétain et du dithioglycolate de dibutylétain.

6. Colle stable au stockage selon l'une des revendications 1 à 5, caractérisée en ce qu'elle contient de 1 à 10% en poids de la combinaison de stabilisant rapportés au poids du PVC postchloré contenu dans la colle pour un taux de dégagement de chlore supposé égal à 5% en poids par an.

7. Colle stable au stockage selon l'une des revendications 1 à 6, caractérisée en ce que la combinaison de stabilisant contient les carbonates et les composés organiques de l'étain avec un rapport pondéral allant d'environ 1,5 à 2,5:1.

7

**8.** Procédé de production de colle stable au stockage, en particulier pour plastiques à base de PVC postchloré, caractérisé en ce qu on ajoute à un mélange de base formé de 5 à 30% en poids de PVC postchloré et de 95 à 70% en poids d'un solvant organique une combinaison de stabilisants contenant des quantités efficaces de composés organiques de l'étain avec au moins une liaison en Sn-C et de carbonates choisis dans le groupe constitué des carbonates d'ammonium, de lithium, de sodium et de potassium ainsi que les additifs usuels tels que modificateurs de résilience, agents antioxydants et stabilisants pour les rayons UV.

**9.** Procédé de production de colle stable au stockage selon la revendication 8, caractérisé en ce qu'on utilise un PVC ayant une teneur en chlore de 65 à 68% et une valeur K de 50 à 69 pour la préparation du mélange de base.

**10.** Procédé de production de colle stable au stockage selon l'une des revendications 8 ou 9, caractérisé en ce que les composés organiques de l'étain sont choisis dans le groupe constitué du dimercaptide de di-n-octylétain, des diothioesters de dibutylétain, du dithioglycolate de di-n-octylétain, du dilaurate de dibutylétain, du maléate de di-n-octylétain, du maléate de dibutylétain, du carboxylate du dibutylétain et du dithioglycolate de dibutylétain.

**11.** Procédé de production de colle stable au stockage selon l'une des revendications 8 ou 10, caractérisé en ce qu'on mélange la combinaison de stabilisant constituée de carbonates et de composés organiques de l'étain avec un rapport pondéral allant d'environ 1,5 à 2,5 : 1.

Fig. 1

Lagerstabilität von PVC-C Klebstoff

VISKOSITÄT (Drage') mPa·s

8000 6000 4000 2000

GEL

im Weißblechgebinde

im Glas

LAGERZEIT bei 40°C

1Tag 1Wo. 2Wo 3Wo 1Monat 3Mon. 6Mon. 1Jahr 2Jahre 5Jah. 10Jahre

Fig. 2

Lagerstabilität von PVC-C Klebstoff mit Organozinnstabilisatoren

VISKOSITÄT (Drage.) mPa·s

8 000
6 000
4 000
2 000

GEL

LAGERZEIT bei 40°C

1 Tag
1 Wo.
2 Wd 3 W
1 Monat
3 Mon.
6 Mon.
1 Jahr
2 Jahre
5 Jah.
10 Jahre

1
2
3
4

1–4, im
Weißblechgebinde

im Glas

1  N-Octylzinnmerkaptid 0,3 Gew.-%
2  Dibutylzinnmercaptopropionat 0,15 Gew.-%
3  Dibutylzinnmaleat 0,15
   Gew.-%
4  Dibutylzinncarboxylat

DIBUTYLZINNDITHIOGLYKOLAT

Fig. 3    Lagerstabilität von PVC-C Klebstoff mit Dibutylzinncarboxylat

1-3 im Weißblechgebinde

GEL

1) 1 Teil auf 100 Teile PVC-C
2) 2 Teile auf 100 Teile PVC-C
3) 3 Teile auf 100 Teile PVC-C

im Glas

VISKOSITÄT (Drage) mPa·s

8 000
6 000
4 000
2 000

10¹   1 Tag   10²   1 Wo. 2 Wo. 3 W. 1 Monat   10³   3 Mon. 6 Mon. 1 Jahr   10⁴   2 Jahre   5 Jah.   10⁵ Std. 10 Jahre

LAGERZEIT   bei   40°C

11

Fig. 4

Lagerstabilität von PVC-C Klebstoff mit Carbonaten

VISKOSITÄT (Drage) mPa·s

8000
6 000
4 000
2 000

GEL

LAGERZEIT bei 40° C

LAGERZEIT

1Tag    1Wo.    2Wo.3W.1Monat    3Mon. 6Mon. 1Jahr 2Jahre    5 Jah. 10Jahre

$10^1$    $10^2$    $10^3$    $10^4$    $10^5$ std.

1
2  3
4

im Glas

1–4 im.
Weißblechgebinde

1  $(NH_4)_2CO_3$
2  $K_2CO_3$
3  $Na_2CO_3$
4  $Li_2CO_3$

Fig. 5  Lagerstabilität von PVC-C Klebstoff mit Stabilisatorkombination

VISKOSITÄT (Drage)  mPa·s

8000

6000

4000

2000

GEL

1-3 im Weißblechgebinde

1

2/3

im Glas

LAGERZEIT bei 40°C

$10^1$

1Tag

$10^2$

1Wo. 2Wo. 3Wo. 1Monat

$10^3$

3Mon. 6Mon. 1Jahr 2Jahre 5Jah. 10Jahre

$10^4$

$10^5$ Std.

13